# EUROPEAN PATENT APPLICATION

(11) **EP 2 749 460 A1**
(43) Date of publication of application: **02.07.2014**
(21) Application number: 12824969.5
(22) Date of filing: 31.07.2012
(51) Int. Cl.: B60R 21/264, B01J 7/00

(54) **INFLATOR**

(30) Priority: 25.08.2011 JP 2011183801
(71) Applicant: Takata Corporation, Tokyo 107-8508 (JP)
(72) Inventor: YANO Kanji, Tokyo 107-8508 (JP); NISHIMURA Jun, Tokyo 107-8508 (JP)
(74) Representative: Banzer, Hans-Jörg
(86) International application number: PCT/JP2012/069518
(87) International publication number: WO 2013/027545

(57) **Abstract**

This inflator (1) is provided with: a housing (10) that forms a combustion space (15) filled therewithin with a gas generant (17); a front pipe that forms a front-side space to which discharge holes (19) that discharged gas generated in the combustion space (15) of the housing (10) are provided; and a filter (16) that is housed in a manner so as to partition the front-side space and the combustion space (15). The inflator (1) is further provided with a partition plate (30) that is provided between the combustion space (15) and the filter (16), with a first gas passage section and a second gas passage section formed thereon. When the pressure of the gas generated in the combustion space (15) is no greater than a set pressure, the partition plate (30) allows passage of the gas to the filter (16) side only from the first gas passage section, and when the pressure of the gas generated in the combustion space (15) exceeds the set pressure, the partition plate (30) allows passage of the gas to the filter (16) side from the first gas passage section and the second gas passage section, thus reducing the temperature of the discharged gas.

## Description

### Technical Field

The present invention relates to an inflator.

### Background Art

Inflators installed to deploy an airbag device are equipped with various screens and filters in an attempt to capture fragments of the burst shim and stabilize gas flow in the gas output passage, so as to enable the discharge of appropriate compressed gas at a nearly constant flow rate from discharge holes in various installation environments (see Patent Literature 1). In Patent Literature 1, the validity of the relevant invention is confirmed on the basis of tank test results for an inflator equipped with various filters (ambient temperature 23 °C).

### Citation List

### Patent Literature

Patent Literature 1: Unexamined Japanese Patent Application Kokai Publication No. 2004-58984

### Summary of Invention

### Technical Problem

In an ordinary inflator, normal operation is demanded for a designated environmental temperature (for example, from -40 °C to 85 °C as the specified temperature). However, even in cases in which an inflator operates normally, the tank tests and the like have confirmed that inflator output during airbag deployment varies depending on differences in environmental temperature. According to test results carried out by the applicant, it has been confirmed that output increases by approximately 25% in the case of an inflator operating at high temperature (approximately 80 °C to 85 °C) compared to normal temperature (23 °C).

For this reason, when an inflator operates at high temperature with a conventional side airbag, curtain airbag, knee airbag, or the like, gas of higher pressure than at normal temperature is introduced into the airbag. For this reason, in order to ensure reliability during airbag inflation, it has been necessary to reinforce the airbag sewing, use high-strength sewing threads in the airbag, partially add seal reinforcing material to the airbag, and the like. In this case, increases in material costs due to using reinforcing members, seal members, special thread, and the like, increases in manufacturing costs due to additional processing steps, and the like become problematic.

In addition, since the compartment space for side airbags and curtain airbags is limited, thin airbag modules are demanded. In the face of such demand, measures such as adding reinforcing members and additional members to an airbag runs counter to the direction of smaller and lighter components, and decrease product competitiveness.

Consequently, rather than applying reinforcing measures to the airbag, decreasing the output differential compared to normal temperature due to changes in environmental temperature with the inflator is considered to be preferable, and analysis and development were conducted along these lines. Herein, when the pressure inside an inflator changes (rises) in response to a change in enviromnental temperature during inflator output, the gas discharge quantity from the inflator may be controlled in response to that pressure change, thereby decreasing the combustion speed of the charges inside the inflator and moderating the temperature of the generated gas. In so doing, damage to the airbag on the side where generated gas is introduced may be reduced. Consequently, an objective of the present invention is to provide an inflator that, by resolving the problems inherent in the technology of the related art discussed above and moderating the temperature of generated gas, is able to decrease the damage imparted during inflation, even to an airbag of ordinary specifications without added reinforcing members or additional members, for example.

### Solution to Problem

In order to achieve the above objective, the present invention is an inflator equipped with a housing that forms a combustion space filled therewithin with a gas generant, a front pipe that forms a front-side space to which discharge holes that discharged gas generated in the combustion space of the housing are provided, and a filter that is housed in a manner so as to partition the front-side space and the combustion space. The inflator is provided with a partition plate that is provided between the combustion space and the filter, with a first gas passage section and a second gas passage section formed thereon. When the pressure of the gas generated in the combustion space is no greater than a set pressure, the partition plate allows passage of the gas to the filter side only from the first gas passage section, and when the pressure of the gas generated in the combustion space exceeds the set pressure, the partition plate allows passage of the gas to the filter side from the first gas passage section and the second gas passage section, thus reducing the temperature of the discharged gas.

Also, in the present invention, the second gas passage section formed on the partition plate is formed on the outer circumference of the first gas passage section, and when the pressure of the gas generated in the combustion space is no greater than the set pressure, the partition plate allows passage of the gas to the filter side only from the first gas passage section, and when the pressure of the gas generated in the combustion space exceeds the set pressure, the partition plate allows passage of the gas to the filter side by widening the first gas passage section out to the second gas passage section, thus lowering the temperature of the discharged gas. Accordingly, since the pressure inside the inflator may be lowered and the discharged gas temperature may also be lowered, the load on an airbag may be moderated.

Furthermore, the present invention is provided with a burst shim that seals the first gas passage section. A notch is formed on the outer circumference of the first gas passage section sealed by the burst shim, such that when the pressure of the gas generated in the combustion space is no greater than the set pressure, the partition plate causes the burst shim sealing the first gas passage section to open and allow passage of the gas to the filter side from only the first gas passage section, and when the pressure of the gas generated in the combustion space exceeds the set pressure, the partition plate causes the notch to burst and allow passage of the gas to the filter side by widening the first gas passage section out to the second gas passage section, thus lowering the temperature of the discharged gas. Accordingly, since the gas passage rate may be increased with a simple structure, pressure inside the inflator may be lowered, and the discharged gas temperature may also be lowered. Thus, the load on an airbag may be moderated.

Also, the present invention is provided with a burst shim that seals the first gas passage section and the second gas passage section. The first gas passage section sealed by the burst shim on the combustion space of the partition plate and the second gas passage section sealed by the burst shim on the combustion space side of the partition plate are formed on the partition plate, such that when the pressure of the gas generated in the combustion space is no greater than the set pressure, the partition plate causes the burst shim sealing the first gas passage section to open and allow passage of the gas to the filter side from only the first gas passage section, and when the pressure of the gas generated in the combustion space exceeds the set pressure, the partition plate causes the burst shim sealing the second gas passage section to open and allow passage of the gas to the filter side from the first gas passage section and the second gas passage section, thus lowering the temperature of the discharged gas. Accordingly, since the gas passage rate may be increased with a simple structure, the pressure inside the inflator may be lowered, and the discharged gas temperature may also be lowered. Thus, the load on an airbag may be moderated.

Another invention is an inflator equipped with a housing that forms a combustion space filled therewithin with a gas generant, a front pipe that forms a front-side space to which discharge holes that discharged gas generated in the combustion space of the housing are provided, and a filter that is housed in a manner so as to partition the front-side space and the combustion space. The inflator is provided with a burst shim that seals the discharge holes. A first discharge hole line sealed by the burst shim on the inner periphery side of the front pipe, and a second discharge hole line sealed by the burst shim on the inner periphery side of the front pipe, are provided on the front pipe and distanced in the axis line direction of the housing, such that when the pressure of the gas generated in the combustion space is no greater than a set pressure, the front pipe causes the burst shim sealing the first discharge hole line to open and allow passage of the gas from only the first discharge hole line, and when the pressure of the gas generated in the combustion space exceeds the set pressure, the front pipe causes the burst shim sealing the second discharge hole line to open and allow passage of the gas from the first discharge hole line and the second discharge hole line, thus lowering the temperature of the discharged gas.

### Brief Description of Drawings

FIG. 1A is a cross-section diagram illustrating an example of an internal configuration of an inflator of the present invention;
FIG. 1B is a discharge hole array of an inflator of the present invention;
FIG. 2 is a perspective view illustrating an exemplary configuration of a front pipe of the inflator illustrated in FIG. 1A;
FIG. 3A is an enlarged cross-section view illustrating an exemplary configuration of a front pipe and discharge hole array of the inflator illustrated in FIG. 1A;
FIG. 3B is an enlarged cross-section view illustrating an exemplary modification of a front pipe and discharge hole array of the inflator illustrated in FIG. 1A;
FIG. 4A,4B is a schematic explanatory diagram illustrating an operating state in a normal temperature environment of the inflator illustrated in FIG. 1 A;
FIG. 5A,5B is a schematic explanatory diagram illustrating an operating state in a high temperature environment of the inflator illustrated in FIG. 1A;
FIG. 6 is a cross-section view illustrating an example of an internal configuration and a partition plate of an inflator of another invention;
FIG. 7 is an enlarged cross-section view illustrating an exemplary configuration of the partition plate illustrated in FIG. 6;
FIG. 8A,8B,8C is a cross-section view illustrating an exemplary modification of the partition plate illustrated in FIG. 7;
FIG. 9A,9B is a schematic explanatory diagram illustrating an operating state in a normal temperature environment of the inflator illustrated in FIG. 6;
FIG. 10A, 10B is a schematic explanatory diagram illustrating an operating state in a high temperature environment of the inflator illustrated in FIG. 6;
FIG. 11A is a cross-section view illustrating an example of an internal configuration of another invention;
FIG. 11B is a partition plate of an inflator of another invention;
FIG. 12 is a perspective view illustrating an exemplary configuration of the partition plate illustrated in FIG. 6;
FIG. 13A,13B is a schematic explanatory diagram illustrating an operating state in a normal temperature environment of the inflator illustrated in FIG. 11; and
FIG. 14A,14B is a schematic explanatory diagram illustrating an operating state in a high temperature environment of the inflator illustrated in FIG. 11.

### Description of Embodiments

Hereinafter, multiple examples will be described with reference to the attached drawings as embodiments of an inflator of the present invention. The inflator of the present invention is used in a thin airbag module such as a side airbag or a curtain airbag, and enables control of output during airbag inflation by reducing the temperature of discharged gas.

### Example 1

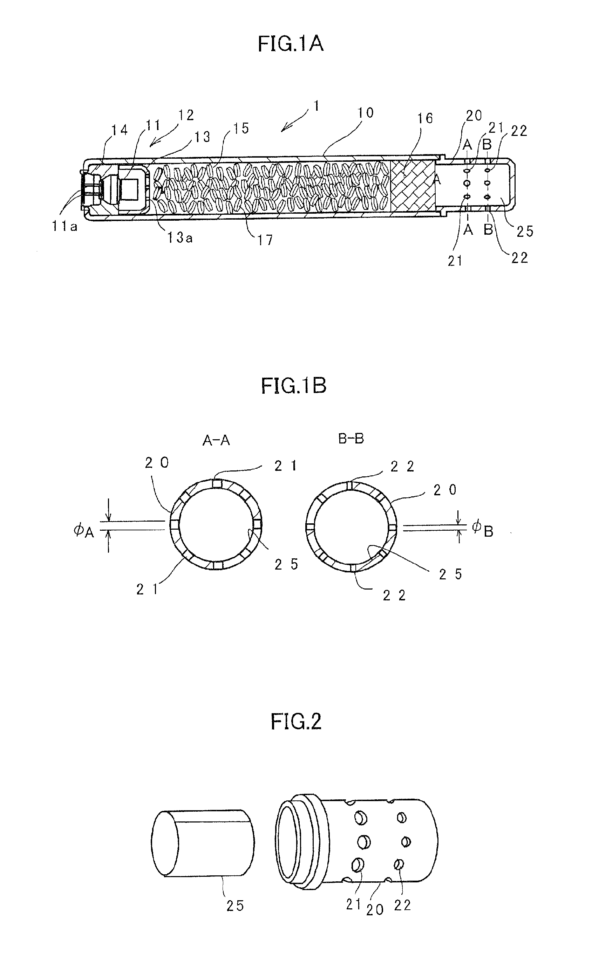

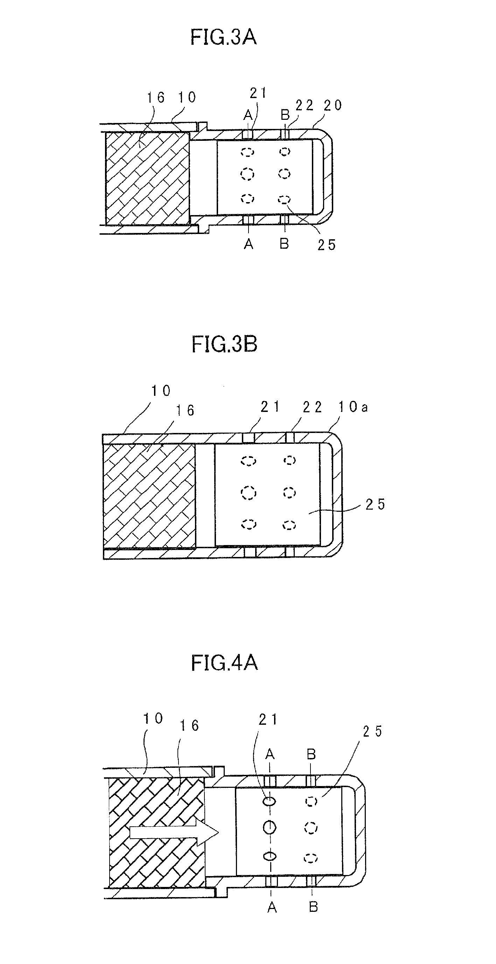

FIGS. 1 to 5 are diagrams for explaining the configuration and operating states of Example 1. FIG. 1 illustrates a cross-section view of an elongated cylindrical inflator 1 installed for a side airbag or the like. As illustrated in the drawing, the housing 10 of the inflator 1 forms an elongated cylindrical shape. At the left end of the housing 10, there is provided an ignition section 12 that internally includes an initiator 11. Meanwhile, a front pipe 20 whose leading end forms a closed cap shape is interlocked with the right end of the housing 10. A front-side space is formed by the inner peripheral surface of this front pipe 20. The mouth section of a folded-up airbag (not illustrated) is affixed to the outer peripheral surface of the front pipe 20 via affixing bolts or the like which are not illustrated. The inflator 1 overall is held via a retain which is not illustrated, and is affixed/held in a designated storage position inside a vehicle body. Note that the shape of the housing 10 may also be a single-pipe shape with a sealed leading end section 10a, without using the front pipe 20, as illustrated in FIG. 3B.

Multiple round holes 13a are formed on the combustion space 15 side of a cover 13 of the housing 10. The initiator 11, which faces the cover 13 in which the round holes 13a are formed, is installed in and held by a holder 14 such that electrode terminals 11a are exposed to the outside. An ignition current from an airbag operation controller, which is not illustrated, is applied to the electrode terminals 11 a of the initiator 11. Furthermore, propellant 17 that acts as a gas generant is filled inside the combustion space 15. In the present Example, flat, tablet-shaped propellant 17 is used as an example.

Furthermore, a filter 16 is housed on the front pipe 20 side inside the combustion space 15. Similarly to the related art, this filter 16 fulfills the role of removing slag mixed in with generated gas. The filter 16 is also anticipated to have a gas temperature cooling effect. The filter 16 of the present Example comprises a cylindrical body matched with the inner diameter of the housing 10, and formed by compression molding of a metal mesh or a fine, randomly curved wire lattice made up of material similar to the related art. The diameter and length of the filter 16 is appropriately set according to the output of the inflator 1 and the length of the combustion space 15 of the housing 10. With this filter 16, the combustion space 15 and the front-side space are partitioned.

On the sides (side walls) of the front pipe 20 interlocked with the leading end of the housing 10, orifices 21 and 22 that act as discharge holes for generated gas are arranged in a line and set with respectively different hole diameters and pitches, as illustrated by the cross-sections A-A and B-B (FIG. 1B). In the present Example, in the cross-section A-A, eight circular primary orifices 21 are formed, spaced at equal intervals (a 45° interval) in the circumferential direction of the front pipe 20. In the cross-section B-B, eight circular supplementary orifices 22 are formed, spaced at equal intervals (a 45° interval) in the circumferential direction of the front pipe 20, and at the same alignment positions as the primary orifices 21 of the cross-section A-A. The hole diameter (ϕA) and number of the primary orifices 21 are set so as to open at the internal pressure during normal operation of the inflator 1 at normal temperature in the tank tests or the like discussed earlier. The supplementary orifices 22 function in order to lower the internal pressure of the inflator 1 when the environmental temperature rises, the effect of which causes the internal pressure of the inflator 1 to become a higher pressure than during normal operation. Consequently, the hole diameter (ϕB) and number of the supplementary orifices 22 are preferably set such that the supplementary orifices 22 open when exceeding a limit pressure set on the basis of data from the tank tests or the like discussed earlier. Note that it is possible to set the opening parameters of the supplementary orifices 22 with varied opening positions (aligned with, alternating with, or offset by a designated angle from the primary orifices 21, or the like), hole diameter, and number. The size relationship between the hole diameters (ϕA, ϕB) of the primary orifices 21 and the supplementary orifices 22 may also be appropriately determined with consideration for the opening conditions of the front pipe 20.

A burst shim 25 adheres to the inner periphery of the front pipe 20 in which these primary orifices 21 and supplementary orifices 22 are formed, as illustrated in FIGS. 2, 3A, and 3B. This burst shim 25 comprises a thin foil metal plate (shim plate). By having this metal plate adhere to the inner periphery of the front pipe 20 in a cylindrical shape as illustrated in FIGS. 2, 3A, and 3B, the primary orifices 21 and the supplementary orifices 22 are sealed from the inner periphery side of the front pipe 20.

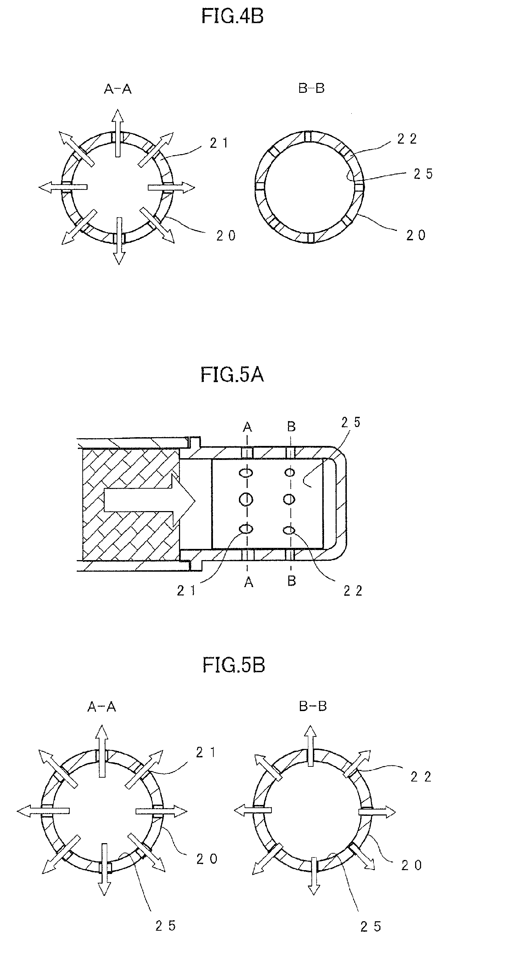

The burst shim 25 is set to an approximate thickness such that when the inflator 1 operates under a normal environmental temperature, the burst shim 25 bursts only at the sites covering the primary orifices 21 as a result of the internal pressure of the inflator 1 acting inside the front pipe 20, with the primary orifices 21 entering an open state, as illustrated in FIG. 4. Furthermore, the burst shim 25 is set to an approximate thickness such that, in the case in which the inflator 1 operates in a state of raised environmental temperature, and the temperature effects cause the internal pressure of the inflator 1 to become a higher pressure than during normal operation (see FIG. 4) and a set limit pressure is exceeded, the burst shim 25 also bursts at the sites covering the supplementary orifices 22 in addition to the primary orifices 21, with the supplementary orifices 22 entering an open state, as illustrated in FIGS. 5A and 5B. By having the primary orifices 21 and the supplementary orifices 22 open in the case in which the internal pressure of the inflator 1 exceeds the set limit pressure, the total surface area of the openings allowing the passage of generated gas increases, the gas discharge quantity increases, and the internal pressure of the inflator 1 lowers. With this lowering of the internal pressure of the inflator 1, the combustion speed of the charges inside the inflator 1 may be controlled (lowered). As a result, gas with a lowered temperature is introduced into the airbag from the inflator 1, and the load applied to the inflating airbag may be reduced.

Note that since output increase of the inflator 1 may possibly occur due to not only temperature changes in the installation environment but also mechanical impacts or the like imparted to the onboard airbag device, it is preferable to also appropriately moderate output increase of the inflator 1 in such operating states.

### Example 2

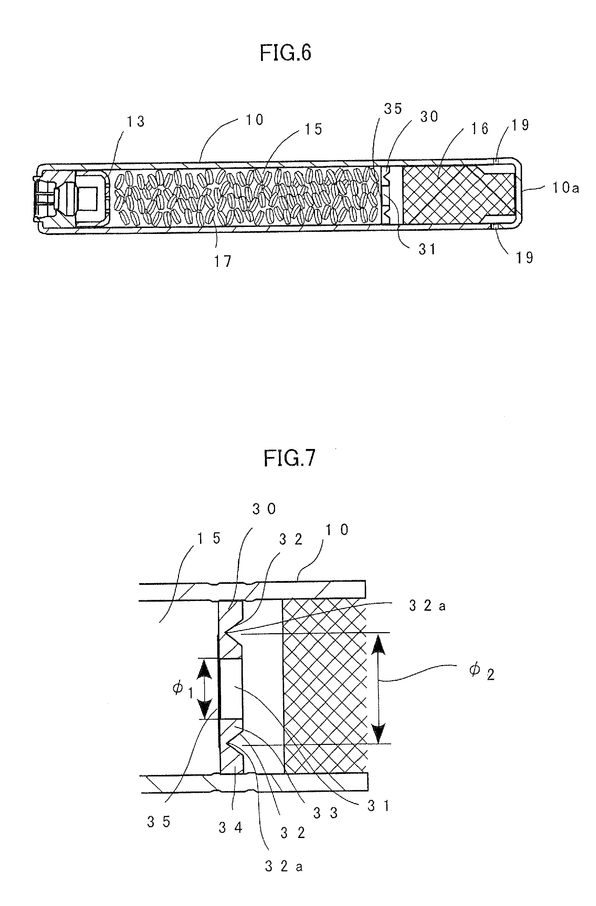

FIGS. 6 to 10 are diagrams explaining the configuration and operating states of Example 2. FIG. 6 illustrates a cross-section view of an elongated cylindrical inflator 1 corresponding to FIG. 1 of Example 1. This inflator 1 forms a housing shape mostly similar to the inflator 1 illustrated in FIG. 1. At the left end of the housing 10, there is provided an ignition section 12 of the same configuration as that illustrated in FIG. 1. Meanwhile, at the right end of the housing 10, a leading end section 10a is formed as a result of the leading end of the housing 10 itself being sealed, unlike Example 1. Additionally, discharge holes 19 are formed on the sides of the leading end section 10a (the sides of the housing 10). A front-side space is formed by the inner periphery of the leading end section 10a in which the discharge holes 19 are provided. Also, a filter 16 is housed on the leading end section 10a side of the combustion space 15 inside the housing 10, and a partition plate 3 0 is attached between the filter 16 and the combustion space 15. Note that the shape and structure of the housing 10 may also be of a type using a front pipe 20 as illustrated in FIG. 3A.

The partition plate 30 is a metallic circular plate having an outer diameter matching the inner diameter of the housing 10, and fulfills the role of partitioning the combustion space 15 and the filter 16 inside the housing 10. Additionally, the partition plate 30 also functions as a base plate in which is formed an orifice that controls the passage rate of gas generated in the combustion space 15. As illustrated in FIG. 7 (cross-section view), in this partition plate 30 there are formed a primary orifice 31 (central part) comprising a round hole (ϕ1), a ring-shaped section 33 of outer diameter (ϕ2) partitioned by a notch 32 running along the circumferential edge of the primary orifice 31 and whose cutaway cross-section fonns an approximate V shape, and an outermost circumferential section 34 positioned on the outer circumference of the ring-shaped section 33. The outer periphery of this partition plate 30 is affixed to the inner periphery of the housing 10. On the combustion space 15 side of the partition plate 30, there is provided a burst shim 35 made up of an adhering shim plate formed in a circular shape that seals the primary orifice 31, and whose diameter is smaller than the outer diameter (ϕ2), or in other words, of a size that does not impede bursting of the notch 32. The partition plate 30 is set to a thickness so as to not deform or fall off from the housing 10 due to the action of the pressure of the combustion space 15 during operation of the inflator 1 under various environmental temperatures. As the means of affixing the partition plate 30 to the housing 10, a riveted section may be formed on the inner periphery of the housing 10 (illustrated example), or affixing projections (not illustrated) may be formed on the inner periphery of the housing 10.

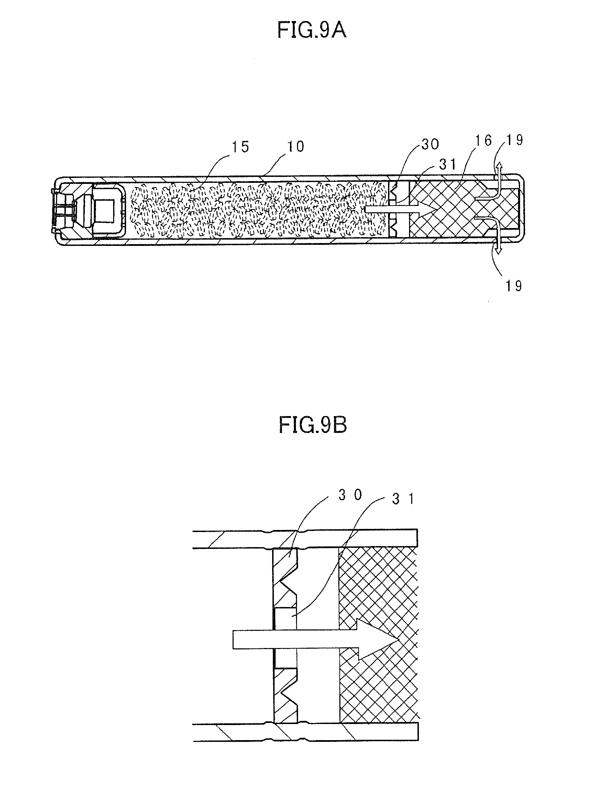

FIGS. 9A and 9B illustrate an operating state of the inflator 1 at a normal environmental temperature. In the case in which the inflator 1 operates at a normal environmental temperature, the primary orifice 31 that acts as a first gas passage section opens, and as diagrammatically illustrated by the white arrow, generated gas, after passing through the primary orifice 31, is discharged from the discharge holes 19 while slag and the like mixed among the gas is removed within the filter 16.

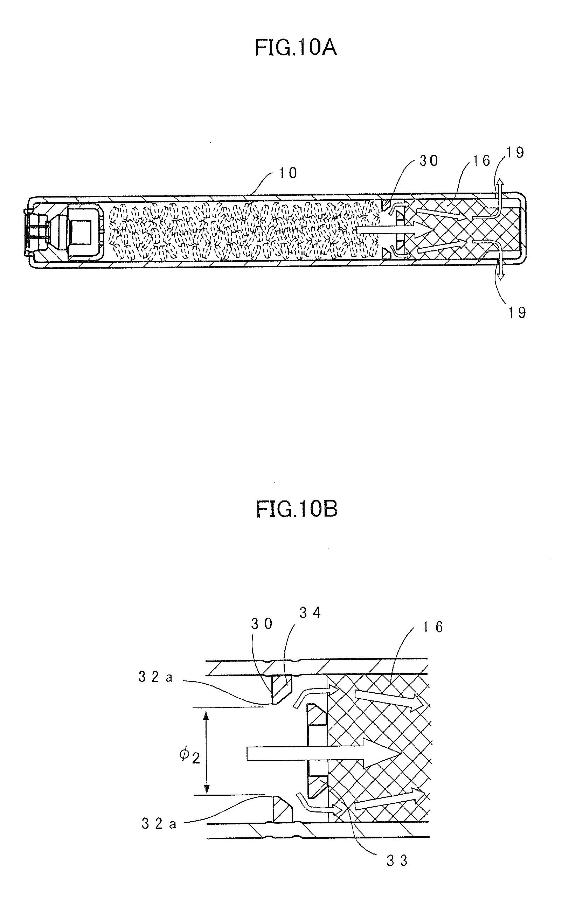

Also, likewise in this Example, and similarly to Example 1, in the case in which the inflator 1 operates with the enviromnental temperature in a risen state, the temperature rise causes the internal pressure of the inflator 1 to become higher pressure than during operation at a normal environmental temperature (see FIG. 9). Subsequently, if the internal pressure of the inflator 1 (the pressure of gas inside the combustion space 15) exceeds a set limit pressure, a rupture section 32a of the notch 32 bursts due to the risen internal pressure of the inflator 1, as illustrated in FIG. 10B. Next, the ring-shaped section 33 falls away, and generated gas passes through the open section formed by the outermost circumferential section 34. In this way, the first gas passage section radially expands (widens) to become a second gas passage section. In other words, by increasing the total surface area of the opening that allows passage of generated gas, the quantity of gas passing through the partition plate 30 increases as indicated by the white arrow in FIG. 10A, and the internal pressure of the inflator 1 lowers. With this lowering of the internal pressure of the inflator 1, the combustion speed of the charges inside the inflator 1 may be controlled (lowered). As a result, the temperature of generated gas in the inflator 1 lowers. At this point, since gas with a lowered temperature is introduced into the airbag (not illustrated) from the discharge holes 19 provided in the housing 10, the load applied to the inflating airbag may be reduced. Also, since the gas passes dispersed over the entire filter 16, it is anticipated that slag and the like may be removed from the gas, while also lowering the gas temperature.

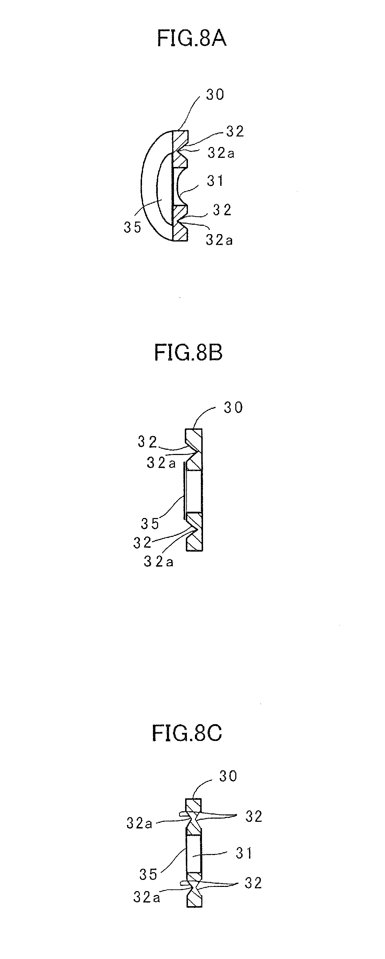

Exemplary modifications of the partition plate 30 are as illustrated in FIGS. 8A, 8B, and 8C. FIG. 8A is a diagrammatic perspective view illustrating half of the partition plate 30 illustrated in FIG. 7, in order to explain the shapes of the circular partition plate 30 and burst shim 35. FIG. 8B illustrates an example in which the notch 32 of the partition plate 30 illustrated in FIG. 7 is formed on the combustion space 15 side, and the burst shim 35 adheres to the combustion space 15 side (FIG. 6). In this case, since it is possible to increase the quantity of gas passing through the partition plate 30 even in a state in which the notch 32 bursts partially without bursting completely, such as a state of being bent to a designated shape, for example, increases in the internal pressure of the inflator 1 may be accommodated. FIG. 8C illustrates an example in which notches 32 are formed on both sides of the partition plate 30, and the rupture section 32a is provided near the center of the thickness portion of the partition plate 30.

### Example 3

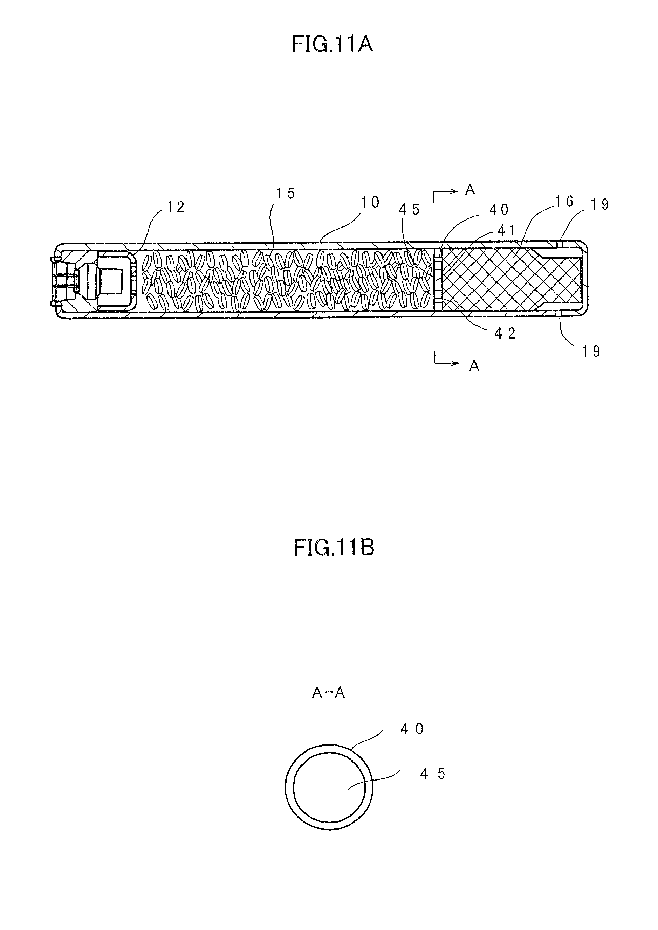

FIGS. 11 to 14 are diagrams explaining the configuration and operating states of Example 3. FIG. 11 illustrates a cross-section view of an elongated cylindrical inflator 1 corresponding to FIG. 6 of Example 2. This inflator 1 forms a shape of the housing 10 mostly similar to the inflator 1 illustrated in FIG. 6. At the left end of the housing 10, there is internally provided an ignition section 12 of the same configuration as that illustrated in FIG. 1. Also, at the right end of the housing 10, a leading end section 10a is formed as a result of the leading end of the housing 10 itself being sealed, similarly to Example 2. Additionally, discharge holes 19 are formed on the sides of the leading end section 10a (the sides of the housing 10). Also, a filter 16 is housed on the leading end section 10a side of the combustion space 15 inside the housing 10, and a partition plate 40 is attached between the filter 16 and the combustion space 15. Note that, likewise in the present Example, the shape and structure of the housing 10 may also be of a type using a front pipe 20 as illustrated in FIG. 3A. Also, instead of the partition plate 40 and the filter 16 being close together, a designated gap may be placed therebetween, and a gas retention space (not illustrated) may be formed in that part.

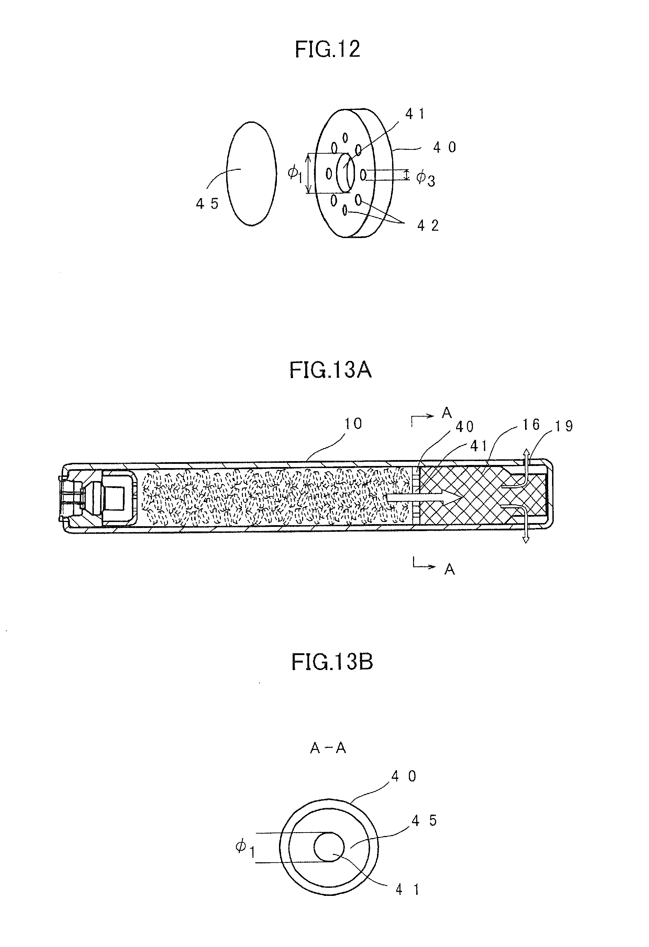

Similarly to Example 2, the partition plate 40 is a metallic circular plate having an outer diameter matching the inner diameter of the housing 10, and fulfills the role of partitioning the combustion space 15 and the filter 16 inside the housing 10. Additionally, the partition plate 40 also functions as a base plate in which are formed orifices that control the passage rate of gas generated in the combustion space 15. As illustrated in FIG. 12, in this partition plate 40 there are formed a primary orifice 41 (central part) comprising a round hole (ϕ1), and supplementary orifices 42 comprising eight round holes (ϕ3) in a circular shape running along the outer circumference of the primary orifice 41. The outer periphery of this partition plate 40 is affixed to the inner periphery of the housing 10. On the combustion space 15 side of the partition plate 40, there is provided a burst shim 45 made up of an adhering shim plate formed in a circular shape that seals the primary orifice 41 and the supplementary orifices 42, as illustrated in FIGS. 11B and 12. The partition plate 40 is set to a thickness so as to not deform or fall off from the housing 10 due to the action of the pressure of the combustion space 15 during operation of the inflator 1 under normal environmental temperatures. In addition, the partition plate 40 is set to a thickness so as to not deform or fall off from the housing 10 due to the action of the pressure of the combustion space 15 during operation of inflator 1, even under various environmental temperatures. Also, the burst shim 45 is set approximately so as to burst and open the primary orifice 41 at the time of reaching a designated gas discharge pressure during operation of the inflator 1 under normal environmental temperature. Means similar to Example 2 are applicable as the means of affixing the partition plate 40 to the housing 10. Furthermore, the opening parameters of the supplementary orifices 42 preferably consider the thickness of the burst shim 45 in addition to the opening positions, hole diameter, and number as factors.

FIGS. 13A and 13B illustrate an operating state of the inflator 1 at a normal environmental temperature. In the case in which the inflator 1 operates at a normal environmental temperature, only the primary orifice 41 opens (the A-A cross-section in FIG. 13B), and as diagrammatically illustrated by the white arrows, generated gas, after passing through the primary orifice 41, is discharged from the discharge holes 19 while slag and the like mixed among the gas is removed within the filter 16.

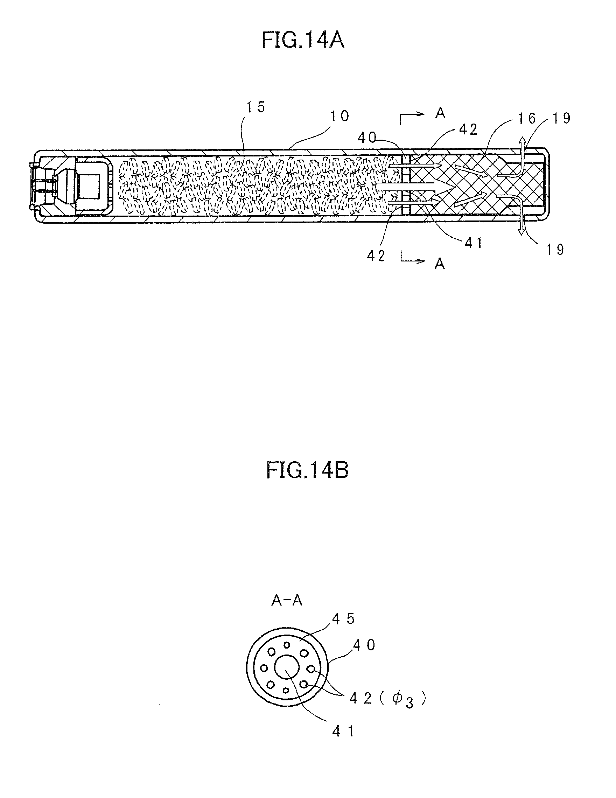

Also, likewise in this Example, and similarly to Example 1 and 2, in the case in which the inflator 1 operates with the environmental temperature in a risen state, the temperature rise causes the internal pressure of the inflator 1 to become higher pressure than during operation at a normal environmental temperature (see FIG. 13). Subsequently, if the internal pressure of the inflator 1 (the pressure of gas inside the combustion space 15) exceeds a set limit pressure, part of the burst shim 45 bursts according to the risen internal pressure of the inflator 1, as illustrated in FIG. 14B. Specifically, an appropriate number of parts covering the supplementary orifices 42 with the burst shim 45 burst, opening the supplementary orifices 42. Thus, the surface area through which generated gas may pass becomes the sum of the primary orifice 41 and the opened supplementary orifices 42, and the gas passage section widens, or in other words, the total surface area of the openings allowing the passage of generated gas increases. Thus, as indicated by the white arrow in FIG. 14A, the quantity of gas passing through the partition plate 40 increases, the internal pressure of the inflator 1 lowers, and the combustion speed of the charges inside the inflator 1 may be controlled (lowered). As a result, the temperature of generated gas in the inflator 1 lowers. At this point, since gas with a lowered temperature is introduced into the airbag (not illustrated) from the discharge holes 19 provided in the housing 10, the load applied to the inflating airbag may be reduced. Also, since the gas passes dispersed over the entire filter 16, it is anticipated that slag and the like may be removed from the gas, while also lowering the gas temperature.

Note that the present invention is not limited to the foregoing Examples, and that various modifications are possible within the scope indicated by the claims. In other words, embodiments obtained by combining technical means that have been appropriately modified within the scope indicated by the claims are also included in the technical scope of the present invention.

In addition, various embodiments and modifications are possible without departing from the scope and spirit of the invention in the broad sense. Furthermore, the foregoing embodiments are for the purpose of describing the invention, and do not limit the scope of the invention. In other words, the scope of the invention is indicated by the claims rather than the foregoing embodiments. In addition, various modifications performed within the scope of the claims or their equivalents are to be regarded as being within the scope of the invention.

This application is based on Japanese Patent Application No. 2011-183801 filed in the Japan Patent Office on August 25, 2011. The entirety of the specification, claims, and drawings of Japanese Patent Application No. 2011-183801 are hereby incorporated by reference.

### Reference Signs List

- 1: Inflator
- 10: Housing
- 15: Combustion space
- 16: Filter
- 19: Gas discharge holes
- 21, 22, 31, 41, 42: Orifices
- 30, 40: Partition plate
- 32: Notch
- 25, 35, 45: Burst shim

## Claims

1. An inflator comprising: a housing that forms a combustion space filled therewithin with a gas generant, a front pipe that forms a front-side space to which discharge holes that discharged gas generated in the combustion space of the housing are provided, and a filter that is housed in a manner so as to partition the front-side space and the combustion space, the inflator further comprising:
a partition plate that is provided between the combustion space and the filter, with a first gas passage section and a second gas passage section formed thereon;
wherein, when the pressure of the gas generated in the combustion space is no greater than a set pressure, the partition plate allows passage of the gas to the filter side only from the first gas passage section, and when the pressure of the gas generated in the combustion space exceeds the set pressure, the partition plate allows passage of the gas to the filter side from the first gas passage section and the second gas passage section, thus reducing the temperature of the discharged gas.

2. The inflator according to Claim 1, wherein
the second gas passage section formed on the partition plate is formed on outer circumference of the first gas passage section, and
when the pressure of the gas generated in the combustion space is no greater than the set pressure, the partition plate allows passage of the gas to the filter side only from the first gas passage section, and when the pressure of the gas generated in the combustion space exceeds the set pressure, the partition plate allows passage of the gas to the filter side by widening the first gas passage section out to the second gas passage section, thus lowering the temperature of the discharged gas.

3. The inflator according to Claim 2, further comprising:
a burst shim that seals the first gas passage section;
wherein a notch is formed on the outer circumference of the first gas passage section sealed by the burst shim, such that when the pressure of the gas generated in the combustion space is no greater than the set pressure, the partition plate causes the burst shim sealing the first gas passage section to open and allow passage of the gas to the filter side from only the first gas passage section, and when the pressure of the gas generated in the combustion space exceeds the set pressure, the partition plate causes the notch to burst and allow passage of the gas to the filter side by widening the first gas passage section out to the second gas passage section, thus lowering the temperature of the discharged gas.

4. The inflator according to Claim 1, further comprising:
a burst shim that seals the first gas passage section and the second gas passage section;
wherein the first gas passage section sealed by the burst shim on the combustion space of the partition plate and the second gas passage section sealed by the burst shim on the combustion space side of the partition plate are formed on the partition plate, such that when the pressure of the gas generated in the combustion space is no greater than the set pressure, the partition plate causes the burst shim sealing the first gas passage section to open and allow passage of the gas to the filter side from only the first gas passage section, and when the pressure of the gas generated in the combustion space exceeds the set pressure, the partition plate causes the burst shim sealing the second gas passage section to open and allow passage of the gas to the filter side from the first gas passage section and the second gas passage section, thus lowering the temperature of the discharged gas.

5. An inflator comprising: a housing that forms a combustion space filled therewithin with a gas generant, a front pipe that forms a front-side space to which discharge holes that discharged gas generated in the combustion space of the housing are provided, and a filter that is housed in a manner so as to partition the front-side space and the combustion space, the inflator further comprising:
a burst shim that seals the discharge holes;
wherein a first discharge hole line sealed by the burst shim on inner periphery side of the front pipe, and a second discharge hole line sealed by the burst shim on the inner periphery side of the front pipe, are provided on the front pipe and distanced in the axis line direction of the housing, such that when the pressure of the gas generated in the combustion space is no greater than a set pressure, the front pipe causes the burst shim sealing the first discharge hole line to open and allow passage of the gas from only the first discharge hole line, and when the pressure of the gas generated in the combustion space exceeds the set pressure, the front pipe causes the burst shim sealing the second discharge hole line to open and allow passage of the gas from the first discharge hole line and the second discharge hole line, thus lowering the temperature of the discharged gas.
